(19) Europäisches Patentamt
European Patent Office
Office européen des brevets

(11) **EP 2 230 499 A2**

(12) **DEMANDE DE BREVET EUROPEEN**

(43) Date de publication:
**22.09.2010 Bulletin 2010/38**

(51) Int Cl.:
***G01K 17/00*** *(2006.01)*

(21) Numéro de dépôt: **10169253.1**

(22) Date de dépôt: **24.10.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **26.10.2007 FR 0758626**

(62) Numéro(s) de document de la (des) demande(s) initiale(s) en application de l'article 76 CBE:
**08842984.0 / 2 203 729**

(71) Demandeur: **Commissariat à l'Énergie Atomique et aux Énergies Alternatives 75015 Paris (FR)**

(72) Inventeur: **Gros D'Aillon, Luc 38320 BRIE ET ANGONNES (FR)**

(74) Mandataire: **Ilgart, Jean-Christophe BREVALEX 3, rue du Docteur Lancereaux 75008 Paris (FR)**

Remarques:
Cette demande a été déposée le 12-07-2010 comme demande divisionnaire de la demande mentionnée sous le code INID 62.

(54) **Calorimetre nucléaire transitoire diphasique hors pile**

(57) L'invention concerne d'abord un dispositif pour mesurer la puissance résiduelle d'une charge (2), comportant :
- des moyens (4) délimitant une première enceinte (4) pour recevoir et contenir une charge à mesurer,
- des moyens (12) délimitant une deuxième enceinte (11) autour de la première enceinte,
- des premiers moyens (18) formant échangeur de chaleur, à appliquer sur ou près d'une charge (2) à mesurer,
- des deuxièmes moyens (28) formant échangeur de chaleur, à appliquer sur les moyens délimitant ladite première enceinte (4).

FIG. 3

EP 2 230 499 A2

**Description**

## DOMAINE TECHNIQUE ET ART ANTÉRIEUR

L'invention concerne le domaine de la mesure de la puissance résiduelle de charges, notamment de type nucléaire.

Elle permet en particulier de mesurer la puissance dissipée dans une charge nucléaire avec un temps de réponse court pour suivre la cinétique de décroissance en séparant, éventuellement, la mesure de puissance γ.

Elle s'applique à tous les combustibles irradiés ou à toute autre charge nucléaire, ou non nucléaire.

Actuellement, les dimensionnements des systèmes d'extraction de chaleur et de protection contre les rayonnements ionisants, en particulier pour les combustibles irradiés, sont réalisés avec de grandes marges par la mauvaise connaissance de la puissance résiduelle, notamment liée à l'incertitude sur la cinétique d'irradiation.

Les évaluations actuelles sont donc actuellement effectuées par des outils numériques prédictifs spécialisés, en utilisant de grandes marges d'incertitude, conduisant à des dispositifs encombrant et onéreux, en particulier pour le transport.

L'irradiation de combustible nucléaire transmute le matériau original en divers noyaux instables, isotopes radioactifs, qui se désexcitent après l'irradiation par émission de rayonnements, en dissipant de la puissance, fonction du type de combustible et de son taux d'irradiation, qualifiée de puissance résiduelle, qui doit être connue avec une précision suffisante, de l'ordre du pour cent, pour dimensionner les systèmes d'évacuation de la puissance, et, éventuellement, de protection contre le rayonnement.

Selon la qualité du suivi d'irradiation, les outils numériques actuels atteignent une précision de l'ordre de dix pour cent à irradiation connue, précision qui se dégrade fortement en fonction de l'incertitude sur la cinétique d'irradiation. Cette dégradation est fortement préjudiciable, en particulier, à la protection contre les rayonnements ionisants.

Par ailleurs, les résultats des outils numériques utilisés doivent être qualifiés par confrontation avec des mesures de qualité.

Il se pose donc le problème de trouver un dispositif et un procédé permettant de réaliser les mesures nécessaires, à une précision meilleure que celle obtenue par un calcul numérique.

Un autre problème est celui de la durée sur laquelle les mesures doivent être effectuées.

En effet, on doit pouvoir disposer de mesures sur une même charge, aussi bien après quelques minutes, temps nécessaire à la préparation de la mesure et au bout duquel la puissance résiduelle peut être encore élevée, par exemple de l'ordre de quelques centaines de watts, ainsi d'ailleurs que sa cinétique de décroissance qui reste elle aussi élevée, qu'après plusieurs mois, à l'issue desquels la puissance résiduelle est beaucoup plus faible, par exemple de l'ordre de quelques watts.

Sur des temps suffisamment long, la gamme de mesure est donc très élevée, de l'ordre d'un facteur cent, impliquant l'utilisation de mesures de grandes dynamiques à précision suffisante, ou de plusieurs système de mesure en cascade, ou, éventuellement, de plusieurs mode de fonctionnement du dispositif de mesure, l'ensemble restant fiable sur de longues périodes (un an), la précision nécessaire étant de l'ordre de un pour cent sur la puissance résiduelle instantanée.

Un tel dispositif de mesure doit donc de préférence avoir un faible temps de réponse, de l'ordre de quelques secondes, et être donc de faible inertie thermique.

Par ailleurs, il se pose le problème de fournir un dispositif de mesure de la puissance résiduelle des combustibles, selon leur nature et le type d'irradiation, pour permettre de minimiser la taille la complexité et le coût de leurs systèmes de protection.

On connait diverses catégories de calorimètres.

Dans le calorimètre « adiabatique », adapté aux systèmes fermés, la température du thermostat est asservie à celle de l'échantillon, avec annulation des échanges de chaleur.

Dans le calorimètre « diatherme à conduction », adapté, en montage différentiel, aux systèmes ouverts, la température de l'échantillon suit celle du thermostat grâce à une faible résistance thermique (dans cette catégorie entre les calorimètres à changement de phase).

Dans le calorimètre « diatherme à compensation de puissance », la température de l'échantillon est asservie à celle du thermostat, par une compensation généralement électrique, avec annulation des échanges de chaleur.

Dans le calorimètre « isopéribolique » (périphérie isotherme), il n'y a pas de couplage particulier entre la température de l'échantillon et celle du thermostat qui est le plus souvent constante.

Les documents FR 2 170 195 et FR 2 603 987 décrivent chacun un dispositif mettant en oeuvre la méthode du fluxmètre, c'est-à-dire la mesure d'un flux thermique par un écart de température créé au travers d'une résistance thermique. Cette méthode est très sensible aux propriétés thermiques du matériau utilisé, ces propriétés devant être en outre constantes dans le temps et l'espace. Cette méthode est également très sensible aux diverses résistances de contact mise en oeuvres et qui sont difficilement maîtrisées.

## EXPOSÉ DE L'INVENTION

L'invention concerne d'abord un dispositif pour mesurer la puissance résiduelle d'une charge, comportant :

- des moyens délimitant une première enceinte pour recevoir et contenir une charge à mesurer,
- des moyens délimitant une deuxième enceinte autour de la première enceinte,
- des moyens pour appliquer une couche de liquide ou une couche humide, par exemple d'épaisseur inférieure à 1 mm ou à 2 mm, autour de la première enceinte,
- des moyens pour maintenir constante la température et/ou la pression d'une vapeur à l'extérieur de la première enceinte ou dans la deuxième enceinte.

Cette structure d'un dispositif selon l'invention permet notamment d'assurer une conduction thermique radiale, depuis les parois de la première enceinte, et donc depuis la couche liquide ou la couche humide, vers l'espace la séparant de la deuxième enceinte.

Un mode de réalisation d'un dispositif selon l'invention est de type diatherme à conduction. Un autre mode de réalisation est de type diatherme à compensation de puissance.

Un tel dispositif peut en outre comporter des moyens pour mesurer une température et/ou une pression sur les moyens délimitant la première enceinte et/ou dans la deuxième enceinte.

Selon un mode de réalisation particulier, ce dispositif comporte en outre :

- des moyens pour faire circuler un fluide caloporteur dans un circuit de condensation, dans la deuxième enceinte,
- des moyens de contrôle du débit du fluide caloporteur pour faire varier ce débit, dans ledit circuit, en fonction de la mesure de température et/ou de pression sur les moyens délimitant la première enceinte et/ou dans la deuxième enceinte.

En outre, des moyens peuvent être prévus pour maintenir constante la température d'entrée d'un fluide caloporteur dans ledit circuit de condensation.

Un tel dispositif peut comporter en outre des moyens pour mesurer, en entrée et en sortie du circuit de condensation, la température d'entrée et de sortie d'un fluide caloporteur.

Selon un autre mode de réalisation, un dispositif selon l'invention comporte une tuyère sonique. Il peut alors, comporter, en outre, une résistance électrique destinée à être plongée dans une phase liquide.

Des moyens peuvent être prévus pour mesurer une variation de puissance fournie à ladite résistance électrique.

Un tel dispositif peut avantageusement comporter en outre des moyens pour recycler, dans la phase liquide, une vapeur extraite par la tuyère.

Les moyens pour appliquer une couche d'humidité comportent de préférence une nappe en matière fibreuse ou poreuse.

Un dispositif selon l'invention peut être muni d'une couche ou d'un volume de fluide, destiné à alimenter les moyens pour appliquer une couche de liquide ou une couche humide autour de la première enceinte. Au total, le volume de fluide est de préférence inférieur à 20 % ou même à 10 % du volume total de la deuxième enceinte.

L'application d'une couche de liquide ou d'une couche humide autour de la première enceinte permet en outre de maintenir la paroi de celle-ci à une température voisine de la température ambiante, que l'on peut prendre de 20°C ou sensiblement voisine de 20°C.

Enfin, le volume délimité par la deuxième enceinte subit préalablement un pompage, de manière à enlever le maximum d'impuretés dans le dispositif.

L'invention concerne également un dispositif pour mesurer la puissance résiduelle d'une charge, comportant :

- des moyens délimitant une première enceinte pour recevoir et contenir une charge à mesurer,
- des moyens délimitant une deuxième enceinte autour de la première enceinte,
- des premiers moyens formant échangeur de chaleur, à appliquer sur ou près d'une charge à mesurer,
- des deuxièmes moyens formant échangeur de chaleur, à appliquer sur les moyens délimitant ladite première enceinte.

Un tel dispositif peut comporter en outre un tube ou une gaine pour y insérer une charge à mesurer, les premiers moyens formant échangeur de chaleur étant appliqués à, ou contenus dans, ce tube ou cette gaine.

Chacun des premier et deuxième moyens formant échangeur de chaleur peut comporter une pompe, un débitmètre, des moyens pour imposer la température d'entrée d'un fluide caloporteur dans lesdits moyens formant échangeur de chaleur, et des moyens de mesure de température d'entrée et de sortie du fluide caloporteur.

L'invention concerne également un procédé pour mesurer la puissance résiduelle d'une charge, mettant en oeuvre un dispositif selon l'invention, tel qu'il vient d'être décrit selon l'un ou l'autre des modes de réalisation ci-dessus ou tel que décrit de manière détaillée, plus loin dans la présente demande.

L'invention concerne donc aussi, notamment, un procédé pour mesurer la puissance résiduelle d'une charge, comportant :

- l'introduction, dans une première enceinte, d'une charge à mesurer, cette première enceinte étant contenue dans une deuxième enceinte,
- l'application d'une couche de liquide ou d'une couche humide, par exemple d'épaisseur inférieure à 1 mm ou à 2 mm, autour de la première enceinte,
- le maintien, à une valeur constante, de la température et/ou la pression d'une vapeur à l'extérieur de la première enceinte ou dans la deuxième enceinte.

La présence d'une couche de liquide ou d'une couche humide autour de la première enceinte permet notamment d'assurer une conduction thermique radiale, depuis les parois de la première enceinte, et donc depuis la couche liquide ou la couche humide, vers l'espace la séparant de la deuxième enceinte.

Un tel procédé peut comporter en outre une étape de mesure d'une température et/ou d'une pression sur, ou contre, la première enceinte et/ou dans la deuxième enceinte.

Selon un mode de réalisation, un tel procédé comporte :

- une circulation d'un fluide caloporteur dans un circuit de condensation, dans la deuxième enceinte,
- une variation du débit du fluide caloporteur, dans ledit circuit de condensation, en fonction de la mesure de température et/ou de pression sur, ou contre, la première enceinte et/ou dans la deuxième enceinte.

On peut maintenir constante la température d'entrée du fluide caloporteur dans ledit circuit de condensation.

Avantageusement, on mesure, en entrée et en sortie du circuit de condensation, la température d'entrée et de sortie du fluide caloporteur.

Selon un autre mode de réalisation, on extrait, par une tuyère sonique, la chaleur produite par la charge, à débit constant.

Une résistance électrique peut être alimentée par une source de puissance, en étant plongée dans une phase liquide ; on mesure alors une variation de puissance fournie à ladite résistance électrique.

L'invention concerne également un procédé pour mesurer la puissance résiduelle d'une charge, comportant :

- l'introduction, dans une première enceinte, d'une charge à mesurer, cette première enceinte étant contenue dans une deuxième enceinte,
- l'application d'une première circulation de fluide caloporteur, sur ou près de la charge à mesurer,
- l'application d'une deuxième circulation de fluide caloporteur, sur les moyens délimitant ladite première enceinte.

Selon une mise en oeuvre de l'invention, on procède aux étapes suivantes :

- on insère la charge nucléaire dans un écran absorbant étanche,
- on place l'ensemble dans une enceinte eau/vapeur à température de saturation ou à pression imposée,
- on alimente la surface externe de l'écran en eau liquide, à partir d'une réserve en fond d'enceinte, par une structure capillaire,
- on extrait la chaleur de l'écran par évaporation, et de l'enceinte par une tuyère sonique ou par le débit secondaire d'un condenseur interne, en ajustant le débit pour conserver la température de surface de l'écran constante.

Le bilan enthalpique du débit secondaire est l'image de la puissance résiduelle instantanée.

La technique de mesure mise en oeuvre par un dispositif ou un procédé selon l'invention est de type calorimétrique.

L'invention permet de réaliser des mesures de précision sur une grande gamme de puissance avec un temps de réponse court, pour suivre d'éventuelles cinétiques de décroissance ; elle peut être adaptée à tout type de charge nucléaire (géométrie, puissance, cinétique...) .

**BRÈVE DESCRIPTION DES DESSINS**

- les figures 1A et 1B représentent un premier mode de réalisation de l'invention,
- la figure 2 représente un deuxième mode de réalisation de l'invention,
- la figure 3 représente un troisième mode de réalisation de l'invention.

**EXPOSÉ DÉTAILLÉ DE MODES DE RÉALISATION PARTICULIERS**

Dans les trois modes de réalisation qui vont être décrits, une charge 2, par exemple une charge nucléaire, est introduite dans un dispositif de mesure désigné globalement par la référence 1. Une telle charge se présente souvent sous la forme d'un « crayon » cylindrique, très allongé, pouvant avoir par exemple jusqu'à 500 mm de longueur pour un diamètre d'environ 10mm. D'autres dimensions peuvent être réalisées, auquel cas les dimensions du dispositif sont adaptées de manière correspondante.

La charge 2, dont la cinétique de décroissance de la puissance résiduelle doit être mesurée, est conditionnée dans une enceinte métallique 4, encore appelée écran, de géométrie connue. De préférence, cette enceinte s'étend le long d'un axe de symétrie XX'. Elle peut avoir une forme cylindrique.

L'enceinte 4 est elle-même disposée dans une enceinte primaire 11 délimitée par une première paroi 12, elle-même disposée dans une enceinte à vide 13 protégée par une couche 14 d'isolant et par un réflecteur 16 de rayonnement thermique (pour protéger du rayonnement extérieur au dispositif 1). La paroi 12 peut elle aussi avoir l'axe XX' comme axe de symétrie. Elle peut elle aussi être de forme sensiblement cylindrique.

Cette enceinte 4 a par exemple une longueur d'environ 500 mm, pour un diamètre d'environ 55 mm. Elle peut être en alliage de tungstène usinable mais aussi en un autre matériau absorbant, tel que le plomb, monobloc ou multicouches, pour réduire les coûts. Pour l'application à des combustibles nucléaires, l'alliage de tungstène est avantageux car il présente une forte absorption linéique, ce qui permet de limiter l'épaisseur de l'écran. En outre, sa conduction thermique élevée est favorable à l'isothermie du dispositif, ce qui permet de limiter le stockage inertiel d'énergie.

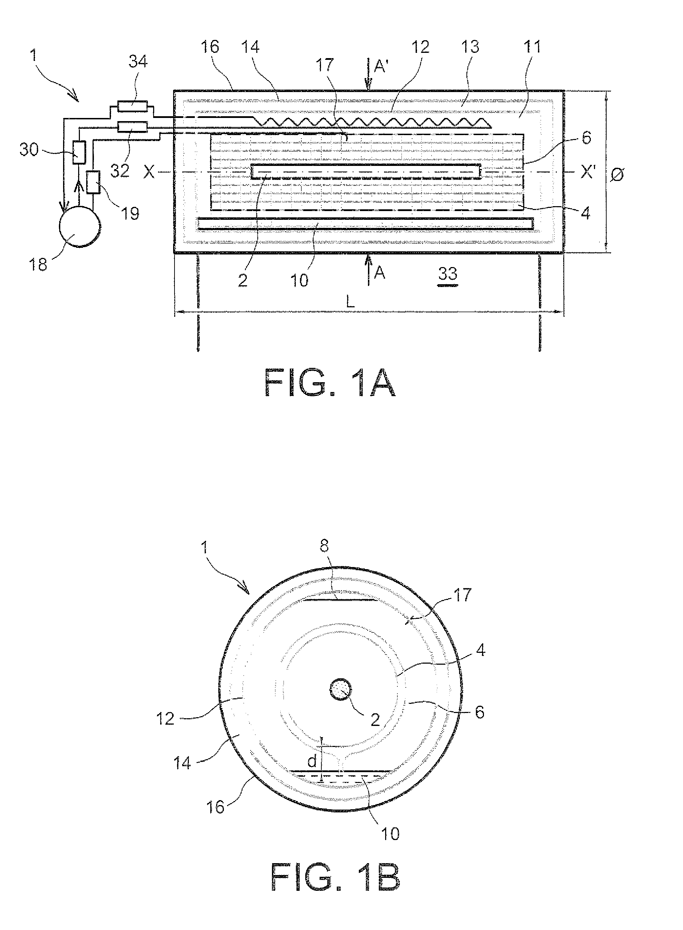

Un premier mode de réalisation de l'invention va être décrit en liaison avec les figures 1A (vue de côté) et 1B (vue en coupe selon le plan AA'). Il s'agit d'un calorimètre de type diatherme à conduction.

Ce premier mode de réalisation comporte d'abord une structure identique à celle qui vient d'être décrite ci-dessus.

En outre, une nappe de fluide 10 (de préférence de l'eau, mais on peut utiliser un autre fluide, par exemple un fréon) est disposée sous l'écran 4, à une certaine distance de celui-ci (quelques centimètres). Dans la structure des figures 1A et 1B, la nappe d'eau est introduite dans le dispositif lors de sa réalisation (en fait : dans l'enceinte 11), avant toute mise en fonctionnement. En outre, l'enceinte 11 est mise préalablement sous vide de manière à enlever le plus possible d'impuretés susceptibles de perturber la mesure. L'intérieur du dispositif est scellé, de sorte qu'aucune évaporation de l'eau, vers l'extérieur du dispositif, n'est possible.

D'une manière générale, on introduit dans le dispositif une quantité de fluide permettant de mouiller les moyens 6 (qui vont être décrit ci-dessous) tout en ne mouillant pas l'écran 4. Celui-ci n'est pas immergé dans l'eau, mais un film d'eau ou de fluide est créé à sa surface par les moyens 6. Cette quantité de fluide est de préférence inférieure, en volume, à 20% et, de préférence encore, supérieure, en volume, à 1% du volume total de l'enceinte primaire 11 délimitée par l'enceinte 12. En principe, une quantité de fluide de l'ordre de quelques % du volume de l'enceinte 11 peut-être suffisante, mais il faut tenir compte de certaines imperfections du système, et notamment d'une éventuelle horizontalité imparfaite. Pour cette raison, il est préférable d'introduire un pourcentage de fluide supérieur à 1 % ou à quelques %, de manière à toujours garantir le mouillage des moyens 6.

En fonctionnement, le dispositif est disposé de manière à ce que la paroi de l'écran 4, de préférence son axe de symétrie, et la surface de la nappe d'eau soient sensiblement parallèles entre elles, par exemple à une distance d l'une de l'autre comprise entre 5 cm et 10 cm ou 20 cm. Autrement dit, le dispositif, ou l'écran 4, est alors disposé de manière sensiblement horizontale, sur un support 33 ou tout type de moyen formant support ou soutien du dispositif

Des moyens 6 vont permettre d'amener une partie de cette eau ou de ce fluide contre la périphérie de l'écran 4. La chaleur dégagée par ce dernier, produite par la charge 2 qu'il contient, permet de vaporiser au moins en partie l'eau amenée contre la périphérie de l'écran.

Ces moyens 6 forment par exemple une structure capillaire autour de l'écran 4 ou un revêtement capillaire autour de cet écran. Une telle structure permet d'alimenter en eau la surface externe de cet écran avec un débit suffisant pour la puissance maximale à extraire (par exemple, pour 300 W de puissance maximale, c'est environ 0,12 g/s d'eau qui est pompé et distribué en surface autour de l'écran 4). Ces moyens 6 comportent par exemple une couche en une matière fibreuse ou poreuse ou rugueuse, qui va être disposée de manière, d'une part à être en contact avec la réserve d'eau 10 située en bas du réservoir (elle trempe dans cette eau, voir figure 1B), et d'autre part à envelopper les parois latérales de l'enceinte 4 (ou au moins les parois de cette enceinte qui sont parallèles à l'axe de symétrie XX'). Il est également possible de mettre en oeuvre un circuit liquide alimenté par une pompe, mais la présence de celle-ci dans le dispositif apporterait de l'énergie dans le dispositif lui-même et perturberait les mesures que l'on souhaite réaliser et qui doivent être très précises.

On crée ainsi autour de l'écran 4 une couche d'eau ou d'humidité d'épaisseur millimétrique, ou submillimétrique. L'épaisseur de cette couche est par exemple inférieure à 1 mm ou à 2 mm.

Cette structure permet d'obtenir une conduction thermique radiale, depuis l'écran 4 vers l'espace qui le sépare de la paroi 12.

Le film liquide ainsi formé autour de la première enceinte permet, par évaporation, d'imposer une température de surface de l'écran 4, très peu sensible au flux thermique local, contrairement à une présence d'une masse d'eau autour de l'écran 4, qui, même à température régulée, ne peut extraire de fort flux thermique sans grand écart de température. Dans un dispositif selon l'invention, cette température uniforme à la surface de l'écran 4 permet d'obtenir un faible temps de réponse et un faible stockage d'énergie dans l'écran $\gamma$, malgré sa forte inertie thermique, grâce à une conduction thermique exclusivement radiale, donc sur une faible longueur.

De préférence, la température de surface de l'écran est imposée à une valeur très proche de la température ambiante, soit une température comprise entre 18°C et 20°C (ou même en dehors de cette gamme), ce qui permet de fortement limiter les pertes thermiques. Par contre, la température dans le volume 11 peut varier par rapport à la température ambiante. Il est possible de corriger le bilan thermique pour tenir compte de ces conditions.

On réalise ainsi, en quelques sortes, une deuxième enceinte isotherme, qui permet elle aussi de limiter les pertes thermiques en ajustant sa température, en particulier à celle de l'ambiante.

La pression régnant dans le volume 11 est alors fixée par le taux de remplissage du liquide dans ce volume et par la température.

Conformément à l'invention, faire évaporer un film liquide autour de l'écran 4 est très avantageux, en particulier par rapport à la technique qui consisterait à tremper l'écran 4 dans un liquide, du fait de la faible pression de fonctionnement qui conduirait alors à un très grand volume de mélange liquide et vapeur (niveau gonflé).

En haut de l'écran 4, sont disposés des moyens 8 formant condenseur, dans lequel un fluide caloporteur va pouvoir circuler. Ces moyens condenseurs, par exemple une boucle de circulation du fluide caloporteur, vont permettre de condenser l'eau qui est présente sous forme de vapeur dans l'enceinte et qui a été vaporisée comme expliqué ci-dessus.

Dans ces moyens condenseurs, le fluide caloporteur va circuler, par exemple à un débit compris entre quelques fractions de gramme par seconde et environ 10 g par seconde.

La surface de ce condenseur 8 et le débit maximal du caloporteur sont adaptés pour extraire la puissance maximale, à température d'entrée du fluide caloporteur imposée par un cryostat.

Selon un mode de réalisation préférée, un surdimensionnement de la surface du condenseur 8 permet de maintenir la température de sortie du caloporteur à une valeur proche de la température de saturation dans l'enceinte 11.

De préférence, l'écart entre la température du fluide caloporteur lorsqu'il entre dans les moyens condenseurs 8 et sa température lorsqu'il sort de ces moyens condenseurs, est réduit au minimum compatible avec la précision de sa mesure. De manière typique, en cours d'utilisation, la différence entre la température d'entrée du fluide dans les moyens ou le circuit 8 et sa température de sortie, est d'environ 10° C.

La puissance thermique est donc extraite de l'enceinte 11 par le débit liquide du secondaire du condenseur dont le débit enthalpique est l'image de la puissance résiduelle instantanée.

Après condensation, l'eau va retomber par gravité au fond du réservoir, ce qui va permettre de conserver un niveau d'eau 10 sensiblement constant. L'intérieur de l'enceinte est conçu pour que l'eau ne retombe pas directement sur l'écran, mais dans le fond liquide 10.

Au moins une mesure de température et/ou de pression de l'atmosphère de l'enceinte primaire 11 peut être effectuée, à l'aide d'un capteur de température et/ou un capteur de pression disposé dans cette enceinte primaire.

Il est cependant préférable, pour une meilleure précision, de mesurer la température directement sur les parois de l'écran 4. Dans ce cas, une sonde de température 17 est appliquée sur ces parois. Cette sonde est de préférence une sonde en platine à précision de 1/100°C.

L'information de température et/ou de pression, par exemple l'information de température délivrée par la sonde 17, est envoyée à des moyens 19 de contrôle d'une pompe 18, par exemple une pompe volumétrique à vitesse variable, située à l'extérieur du dispositif 1. Selon un exemple, la pompe est entraînée par un moteur pas à pas à haute fréquence.

Cette pompe 18 va permettre d'effectuer une régulation du débit du fluide caloporteur qui circule dans les moyens condenseurs 8, afin de maintenir constante la température et/ou la pression mesurée. Le circuit de circulation du fluide caloporteur comporte en outre un débitmètre, un cryostat 30 imposant la température d'entrée du fluide caloporteur dans les moyens condenseurs 8, et des moyens 32, 34 de mesure de température, en entrée et en sortie du condenseur. De préférence, le débitmètre est de type « Coriolis ».

Dans le cas de l'exemple de la sonde 17, celle-ci va permettre, en liaison avec les moyens de régulation du débit, de maintenir isothermes, et à température constante, les parois de l'enceinte 4. Une mesure de température ou une mesure de pression dans le volume 11 conduirait à maintenir constants ces paramètres au cours de la mesure.

La valeur de la température et/ou de la pression, mesurée à l'intérieur de l'enceinte 11 ou sur les parois de l'enceinte 4, est telle que l'atmosphère qui environne l'écran 4 est maintenue à basse pression, de l'ordre de quelques dizaines de mbar, par exemple 26 mbar, afin que l'eau 10 puisse bouillir à faible température, ou à température ambiante, par exemple à sensiblement 22°C, ou inférieure à 30°C.

Un réglage des conditions de température de l'enceinte 11 à une valeur proche de la température ambiante permet en outre de minimiser les pertes thermiques.

Le stockage inertiel est minimisé par l'isothermie de la surface de l'écran 4, l'utilisation d'un matériau conducteur de la chaleur pour les parois de cet écran, et la régulation ou le contrôle de température de surface de l'écran 4, ou de température et/ou de pression dans l'enceinte 11, régulation ou contrôle obtenu à l'aide du débit du caloporteur du secondaire du condenseur 8.

Ce dispositif permet de garantir, pour une charge nucléaire cylindrique de 10 mm de diamètre et 500 mm de longueur, avec une puissance maximale de 260 W et minimale de 4 W, un temps minimal de 30 s pour une décroissance de 1 %, et une évaluation de la puissance résiduelle instantanée à mieux que 1 % sur toute la gamme de mesure pendant six mois. En outre, le temps de réponse d'un tel dispositif est très faible, inférieur à 20 secondes ou à 10 secondes. Ce temps de réponse correspond au temps nécessaire pour mesurer une certaine variation de puissance qui intervient de manière quasiment instantanée (fonction échelon) à l'intérieur du dispositif.

Dans cet exemple de réalisation la quantité minimum d'eau à introduire dans le volume 11 est d'environ 1 % de ce volume 11. Ce dernier est d'environ 4 l, le volume minimum du fluide est donc d'environ 40 cm$^3$, ce qui permet de mouiller le système capillaire 6 tout en ne mouillant pas l'écran 4. Afin de compenser les éventuels défauts d'horizontalité, on choisi d'introduire un pourcentage de fluide supérieur à 1%, soit environ 300 cm$^3$ dans

cet exemple. La température ambiante est de l'ordre de 20° Celsius, et la température de la paroi 4 étant maintenue aussi proche que possible de la température ambiante, il en résulte une pression, régnant dans le volume délimité par l'enceinte 11, d'environ 20 mbar absolue. Pour le bilan thermique, on a considéré que les pertes thermiques sont, dans cet exemple, de l'ordre de 85 mW/K.

D'une manière générale, avec un tel dispositif selon l'invention, il est possible de mesurer le bilan thermique du système par le débit du fluide caloporteur. La puissance à mesurer est en effet directement liée au débit du fluide caloporteur, à sa température d'entrée dans les moyens condenseurs 8 et à sa température de sortie de ces moyens 8. Comme ces deux températures sont maintenues à peu près constantes, et sont mesurées, il reste à mesurer le débit pour obtenir la puissance résiduelle de la charge 2.

Un exemple de traitement des données, pouvant être mis en oeuvre par des moyens de calcul non représentés sur la figure, est le suivant :

- conversion des grandeurs électriques mesurées (température, débit) en grandeurs physiques représentatives, en prenant en compte la fonction de transfert des capteurs,
- éventuellement, contrôle des critères de cohérence, comme la redondance,
- l'évaluation de la puissance résiduelle instantanée, par le bilan enthalpique du secondaire du condenseur, comprenant celle des pertes thermiques et du stockage inertiel, avec la propagation d'incertitude associée.

Dans ce dispositif, on extrait la puissance résiduelle de la charge par le débit massique du secondaire du condenseur 8. La température d'entrée du fluide caloporteur peut être maintenue constante par un cryostat ; le débit du caloporteur peut donc être régulé pour maintenir constante la température et/ou la pression dans l'enceinte 11 ou sur les parois de l'écran 4.

Ce mode de réalisation permet de mesurer l'ensemble de toutes les contributions à la puissance résiduelle, que ce soit la contribution des rayonnements $\alpha$ et $\beta$, ou celle des rayonnements $\gamma$.

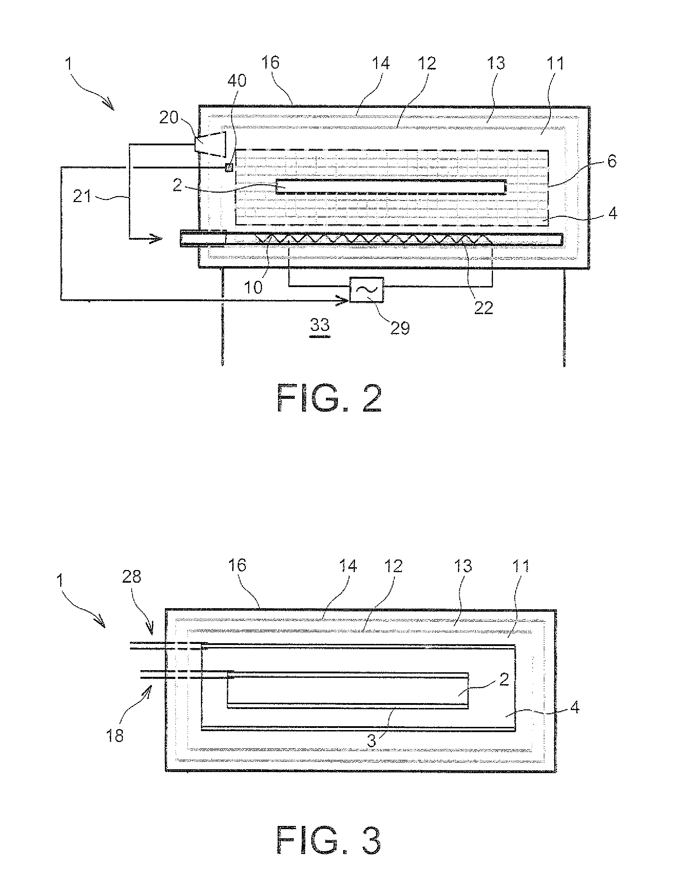

Un autre mode de réalisation de l'invention est représenté en figure 2. Il s'agit d'un calorimètre de type diatherme à compensation de puissance.

Des références numériques identiques à celles de la figure 1A y désignent des éléments identiques ou similaires.

On retrouve donc, outre l'enceinte ou écran 4, la structure capillaire 6, qui permet de former une couche d'humidité autour de cet écran, et la nappe d'eau ou de fluide 10. Les remarques déjà faites ci dessus s'appliquent notamment à cette couche d'humidité (fonction, épaisseur, volume, en pourcentage du volume de l'enceinte 11), à la structure capillaire 6, et à la nappe de fluide 10, qui est, elle aussi, présente. Préalablement au remplissage en eau, on fait le vide dans le dispositif.

Là encore, en fonctionnement, le dispositif est disposé de manière à ce que la paroi de l'écran 4 et la surface de la nappe d'eau soient sensiblement parallèles entre elles, par exemple séparées par une distance comprise entre 5 cm et 10 cm ou 20 cm. Autrement dit, le dispositif est alors disposé de manière sensiblement horizontale, sur les moyens 33 formant support.

Dans ce mode de réalisation, la mesure est effectuée à puissance globale constante.

Le dispositif comporte une tuyère sonique 20, qui va permettre d'extraire la chaleur avec un débit constant. En fait, la chaleur est extraite par un débit massique vapeur sortant au travers de la tuyère 20.

La chaleur extraite est calibrée, à puissance extraite constante, légèrement supérieure à la puissance résiduelle maximale.

La pression à l'intérieur de l'enceinte 12 est maintenue constante au cours de la décroissance de la puissance résiduelle, par une génération de vapeur annexe due à la puissance dissipée par une résistance électrique compensatoire 22 plongée dans la phase liquide 10. La puissance résiduelle instantanée de la charge 2 est l'écart entre la puissance enthalpique constante de la tuyère et celle de la résistance électrique compensatoire. On peut aussi, en variante, chercher à maintenir constante la température de la vapeur dans l'enceinte 11 ou la température de l'écran 4 à l'aide d'une sonde telle que la sonde 17 déjà décrite ci-dessus. Cependant, il est plus commode de travailler à pression constante dans l'enceinte 11.

La variation de puissance est fournie à la résistance compensatoire 22 par des moyens de régulation 29 de tension ou de courant, eux-mêmes commandés par la pression de l'enceinte diphasique, qui reste constante. La pression est mesurée dans l'enceinte par un capteur 40 et la variation de puissance donne la variation de puissance de la charge 2 pour une pression d'enceinte donnée. La tuyère critique 20 débite un débit-masse connu par étalonnage, donc une puissance enthalpique Pe (produit du débit-masse Dm par la chaleur latente de vaporisation Cv), et la puissance résiduelle est égale à la puissance enthalpique Pe de la tuyère moins la puissance électrique Pél de la résistance compensatoire 22.

Là encore, un traitement des données mesurées peut être mis en oeuvre par des moyens de calcul non représentés sur la figure.

De tels moyens permettent de calculer la puissance résiduelle Pr selon les indications données ci-dessus :

$$Pr = Pe - Pél$$

$$Pe = Dm \times Cv.$$

Pour des énergies totales dissipées faibles, des puissances résiduelles faibles ou des temps courts, ce mode de réalisation peut fonctionner en eau perdue, avec une charge en eau initiale adaptée.

Pour des énergies totales dissipées fortes, la vapeur extraite par la tuyère 20 peut être recyclée en eau et réinjectée dans la phase liquide 10. Par exemple, la vapeur est condensée dans un cryostat externe et réalimente la réserve d'eau 10 de l'enceinte 12 par injection gravitaire, dans le bas du dispositif. Autrement dit, dans ce mode de réalisation, la vapeur est extraite du dispositif, mais peut-être condensée à l'extérieur de celui-ci (voir flèche 21 sur la figure 2), et réinjectée dans celui-ci.

Les caractéristiques, et notamment le temps de réponse et la précision sont les mêmes que déjà indiquées ci-dessus.

Un autre mode de réalisation de l'invention est représenté en figure 3. Des références numériques identiques à celles des figures précédentes y désignent des éléments identiques ou similaires.

Pour des raisons de protection contre les rayonnements ionisants, il peut être intéressant d'évaluer la contribution du rayonnement gamma à la puissance résiduelle.

Le dispositif de mesure peut être adapté en conséquence, par l'utilisation de deux systèmes 18, 28 d'extraction de la puissance de l'enceinte primaire, l'un pour la puissance dissipée dans le crayon 2, ou directement autour de celui-ci, et l'autre dans l'écran 4. Les caractéristiques préférentielles de symétrie autour d'un axe tel que l'axe XX' de la figure 1A sont encore valables. En particulier, l'écran 4 a lui même, de préférence, une symétrie cylindrique.

Un fluide caloporteur circule dans chacun de ces échangeurs.

Selon un mode de réalisation, pour chaque échangeur, la température d'entrée et la température de sortie du fluide caloporteur sont mesurées et maintenues constantes, et on régule le débit de chaque fluide. Autrement dit, le circuit de circulation de fluide de chaque échangeur comporte une pompe, qui règle le débit du fluide, un débitmètre, un cryostat, qui impose la température d'entrée du fluide dans le dispositif de mesure, et des moyens de mesure de température entre l'entrée et en sortie de l'échangeur.

À partir des variations de débit massique du fluide caloporteur du premier échangeur 18, on obtient la variation de puissance résiduelle de la charge 2.

À partir des variations de débit massique du fluide caloporteur du deuxième échangeur 28, on obtient la variation de la partie de la puissance résiduelle de la charge 2 due au rayonnement γ.

Des moyens de mesure de débit massique peuvent donc être prévus pour chaque échangeur.

Dans certains cas, pour des raisons de commodité et de sécurité, notamment lorsque la charge est de type combustible nucléaire, l'échangeur 18 n'est pas appliqué directement sur la charge 2, mais sur ou dans un tube ou une gaine 3 dans lequel ou laquelle la charge est glissée. La ou les parois de ce tube ou de cette gaine sont donc situées au plus près de la charge.

L'échangeur 18 permet de mesurer la puissance résiduelle en alpha et béta et l'échangeur 28 permet de mesurer la puissance résiduelle en gamma. Ces deux puissances sont égales aux produits des débits massiques des fluides caloporteurs correspondants par l'écart d'enthalpie de l'eau entre la sortie et l'entrée.

Là encore, un traitement des données mesurées peut être mis en oeuvre par des moyens de calcul non représentés sur la figure.

De tels moyens permettent de calculer les puissances résiduelles, en alpha et béta d'une part, et en gamma d'autre part, selon les indications données ci-dessus.

Des mesures et des simulations ont été effectuées:

- Pertes thermiques :

   Le dispositif selon l'invention est conçu pour avoir des pertes thermiques minimales, par son fonctionnement proche de la température ambiante et par des protections thermiques performantes, enceinte à vide avec écran antiradiatif multicouche, isolation polyuréthane et écran réflectif de lumières ambiantes.

Néanmoins, les puissances à mesurer pouvant être relativement faibles, on cherche à caractériser les pertes thermiques pour permettre une évaluation précise de la puissance.

Par un simulateur électrique de la charge nucléaire, un dispositif du type des figures 1A et 1B est mis en fonctionnement stable à une température de régulation de + 5 °C et de - 5 °C par rapport à la température ambiante, la puissance étant coupée, la température de l'écran est mesurée pendant plusieurs heures pour suivre son évolution vers la température ambiante permettant de définir son temps caractéristique de mise à l'équilibre et donc ses pertes thermiques.

Les mesures montrent que l'historique de la température de l'écran (T) peut se mettre sous la forme

$$(T - T_\infty) / (T_0 - T_\infty) = e^{-\alpha * t}$$

$\alpha$ étant le rapport de la conduction thermique équivalente à l'inertie connue du dispositif (7 kJ/K), ce qui conduite à une perte thermique globale de 80mW/K conforme aux prévisions.

- Mesure de puissance :

Le dispositif étant conçu pour mesurer une puissance résiduelle de 260 à 4.5 W, des essais ont été effectués, avec un dispositif du type des figures 1A et 1B, à l'aide d'un simulateur électrique de la charge nucléaire pour une puissance stabilisée variant sur toute la gamme, la puissance enthalpique du secondaire du condenseur 8 étant comparée à la puissance électrique du simulateur. Les résultats ont montré que après prise en compte des pertes thermiques, les résultats étaient toujours compatibles avec la précision attendue (+/- 1%).

Un dispositif selon l'invention présente un temps de réponse faible, de l'ordre de 10 secondes ou moins. En outre, une précision importante est assurée, inférieure ou égale à 1 %. Enfin, un dispositif selon l'invention peut fonctionner sur une grande dynamique de mesure, avec un facteur 100 entre la puissance maximale et la puissance minimale.

Un dispositif selon l'invention, du fait de ses faibles pertes thermiques est en outre adapté à la mesure d'une puissance minimale à mesurer de l'ordre de 4 W.

## Revendications

1. Dispositif pour mesurer la puissance résiduelle d'une charge (2), comportant :

- des moyens (4) délimitant une première enceinte (4) pour recevoir et contenir une charge à mesurer,
- des moyens (12) délimitant une deuxième enceinte (11) autour de la première enceinte,
- des premiers moyens (18) formant échangeur de chaleur, à appliquer sur ou près d'une charge (2) à mesurer,
- des deuxièmes moyens (28) formant échangeur de chaleur, à appliquer sur les moyens délimitant ladite première enceinte (4).

2. Dispositif selon la revendication 1, comportant en outre un tube ou une gaine (3) pour y insérer une charge (2) à mesurer, les premiers moyens formant échangeur de chaleur étant appliqués à, ou contenus dans, ce tube ou cette gaine.

3. Dispositif selon la revendication 1 ou 2, chacun des premiers et deuxième moyens formant échangeur de chaleur comportant une pompe, un débitmètre, des moyens pour imposer la température d'entrée d'un fluide caloporteur dans lesdits moyens formant échangeur de chaleur, et des moyens de mesure de température d'entrée et de sortie du fluide caloporteur.

4. Dispositif selon l'une des revendications 1 à 3, les premiers moyens délimitant la première enceinte (4) étant en tungstène ou en plomb.

5. Dispositif selon l'une des revendications précédentes, comportant en outre une couche (14) d'isolation thermique, et un réflecteur (16) de rayonnement thermique.

6. Dispositif selon l'une des revendications précédentes, comportant en outre des moyens de calcul de puissance résiduelle de la charge, en alpha et bêta d'une part, et en gamma d'autre part, à partir de variations de débit massique d'un fluide caloporteur dans chacun des échangeurs.

7. Procédé pour mesurer la puissance résiduelle d'une charge (2), comportant :

- l'introduction, dans une première enceinte (4), d'une charge (2) à mesurer, cette première enceinte étant contenue dans une deuxième enceinte (11),
- l'application d'une première circulation de fluide caloporteur, sur ou près de la charge (2) à mesurer,
- l'application d'une deuxième circulation de fluide calopoteur, sur les moyens délimitant ladite première enceinte (4).

8. Procédé selon la revendication 7, dans lequel la température d'entrée et la température de sortie de chaque fluide caloporteur est mesurée et maintenue constante, et le débit de chaque fluide est régulé.

9. Dispositif selon la revendication 7 ou 8, la première circulation de fluide caloporteur étant appliquée sur ou dans un tube ou une gaine (3) dans laquelle la charge à mesurer est insérée.

10. Procédé selon l'une des revendications 7 à 9, chacun des premiers et deuxième moyens formant échangeur de chaleur comportant une pompe, un débitmètre, des moyens pour imposer la température d'entrée d'un fluide caloporteur dans lesdits moyens formant échangeur de chaleur, et des moyens de mesure de température d'entrée et de sortie du fluide caloporteur.

11. Procédé selon l'une des revendications 7 à 10, la variation de puissance résiduelle de la charge (2) étant obtenue à partir de variations de débit massique de la première circulation de fluide caloporteur, sur ou près de la charge (2) à mesurer.

12. Procédé selon l'une des revendications 7 à 11, la variation de la partie de la puissance résiduelle de la charge (2) due au rayonnement $\gamma$ étant obtenue

**EP 2 230 499 A2**

à partir de variations de débit massique de la deuxième circulation de fluide caloporteur, sur les moyens délimitant ladite première enceinte (4).

FIG. 1A

FIG. 1B

FIG. 2

FIG. 3

**RÉFÉRENCES CITÉES DANS LA DESCRIPTION**

**Documents brevets cités dans la description**

- FR 2170195
- FR 2603987